# EUROPÄISCHE PATENTSCHRIFT

(11) **EP 0 787 267 B1**
(45) Veröffentlichungstag und Bekanntmachung des Hinweises auf die Patenterteilung: **23.12.1998**
(21) Anmeldenummer: 95934606.5
(22) Anmeldetag: 12.10.1995
(51) Int. Cl.: F16H 25/24, A47C 20/04

(54) **ANTRIEB ZUR VERSTELLUNG VON TEILEN VON SITZ- UND LIEGEMÖBELN**
MECHANISM FOR ADJUSTING PARTS OF SEATING AND RECLINING FURNITURE
MECANISME D'ENTRAINEMENT POUR DEPLACER DES PARTIES DE SIEGES OU DE MOBILIER DE RELAXATION

(30) Priorität: 18.10.1994 DE 9416742 U; 02.11.1994 DE 9417433 U
(43) Veröffentlichungstag der Anmeldung: 06.08.1997
(73) Patentinhaber: Okin Gesellschaft für Antriebstechnik MbH & Co. KG, 51645 Gummersbach (DE)
(72) Erfinder: Koch, Dietmar, 51645 Gummersbach (DE)
(74) Vertreter: Stachow, Ernst-Walther, Prof. Dr.
(86) Internationale Anmeldenummer: DE9501432
(87) Internationale Veröffentlichungsnummer: WO9612123

(56) Entgegenhaltungen:
- CH-A- 615 333
- DE-A- 3 734 922
- DE-U- 8 903 603
- US-A- 5 170 675

## Beschreibung

Die Erfindung betrifft einen Antrieb zur Verstellung von Teilen von Sitz- und Liegemöbeln entsprechend den Merkmalen des Oberbegriffs von Anspruch 1.

Ein derartiger Antrieb ist beispielsweise aus dem DE-GM 89 03 603 bekannt geworden, bei dem innerhalb eines Gehäuses ein Getriebe, bestehend aus einem mit einer Spindel verbundenen Zahnrad und einer mit diesem im Eingriff stehenden Schnecke, angeordnet ist. Die Schnecke wird durch einen seitlich am Gehäuse befestigten Elektromotor angetrieben. Auf der Spindel ist innerhalb einer aus dem Gehäuse hervorstehenden Hubrohraufnahme eine Mutter, an der ein in der Hubrohraufnahme verschiebbares Hubrohr befestigt ist, verdrehfest geführt. Wird dieser Antrieb über eine am Gehäuse befindliche Aufnahmevorrichtung ortsfest verschwenkbar gelagert und das Hubrohr mit einer Verstelleinrichtung für Lattenroste gekoppelt, so läßt sich dieses auf einfache Weise verstellen.

Bei einem derartigen auch als Einzelantrieb bezeichneten Antrieb wird dessen Gesamtlänge durch die für die Führung des Hubrohres in der Hubrohraufnahme erforderliche Mindestlänge zuzüglich des Hubweges des Hubrohres bestimmt. Diese Mindestlänge ist erforderlich, um ein Abknicken des Hubrohres bei großen Verfahrwegen mit Sicherheit auszuschließen. Das bedeutet, daß mit vergrößertem Hub des Hubrohres gleichzeitig eine Verlängerung der Hubrohraufnahme erforderlich ist. Daraus resultiert, daß innerhalb gewisser Grenzen Gehäuse mit unterschiedlich langen Hubrohraufnahmen herzustellen sind.

Weiterhin ist aus der DE 37 34 922 Al eine Verstelleinrichtung bekannt geworden, die auf einem Profilrohr mittels eines Mutter/Spindel-Getriebes in Längsrichtung verstellbar ausgeführt ist. Das innerhalb des Profilrohres befindliche Mutterteil ist einschließlich einer das Profilrohr teilweise umschließenden Gleitschale und von im Profilrohr in Nuten geführten Leisten einstückig ausgeführt. Dazu ist zwischen der Mutter und der Gleitschale ein diese Teile verbindender Steg vorgesehen, der durch eine Nut im Profilrohr greift. Da die Gleitschale das Profilrohr nur teilweise umgreift, ist eine zusätzliche Gleitstütze vorgesehen, wobei die Gleitschale und die Gleitstütze miteinander verschraubt sind.

Der Erfindung liegt deshalb die Aufgabe zugrunde, einen kompakten und kostengünstig herstellbaren, einfach zu montierenden Antrieb für Teile von Sitz- und Liegemöbeln, vorzugsweise für verstellbare Sessel, zu schaffen, bei dem die Baulänge des Gehäuses unabhängig vom zu realisierenden Hub des Antriebes ist.

Diese Aufgabe wird durch die Merkmale des Anspruchs 1 gelöst.

Durch diese Lösung wird ein besonders kompakter und einfach aufgebauter Antrieb für verstellbare Sessel geschaffen, dessen Gesamtlänge durch die gewünschte Hublänge der Stelleinrichtung zuzüglich der Länge des Grundgehäuses bestimmt wird und bei dem die Länge des Grundgehäuses unabhängig von der Hublänge der Stelleinrichtung ist. Außerdem bleibt die Gesamtlänge des Antriebes bei allen innerhalb der vorgegebenen Grenzen frei wählbaren Stellwegen konstant. Das hat den besonderen Vorteil, daß kein zusätzlicher Raum im Bereich des Antriebes freigehalten werden muß. Die Montage der Mutter mit dem Schiebeteil erfolgt durch einfaches Aufstecken auf die Führungsprofile bei gleichzeitigem Drehen der Spindel.

Ein besonderer Vorteil der Erfindung ist darin zu sehen, daß das Schiebeteil einstückig mit der Mutter verbunden werden kann. Das kann beispielsweise durch Herstellen eines Spritzgußteiles mit innenliegend eingeformter Mutter erfolgen. Dieses Spritzgußteil kann als einzelnes Schiebeteil oder in beliebiger Länge und anschließendem Aufteilen in einzelne Schiebeteile problemlos hergestellt werden. Als Material hierfür kann Kunststoff oder Aluminium verwendet werden.

Eine Fortbildung der Erfindung ist dadurch gekennzeichnet, daß die Führungsprofile einen halbschalenförmigen mäanderähnlichen Querschnitt aufweisen und formschlüssig mit dem Grundgehäuse verbunden sind. Das kann bevorzugt dadurch erfolgen, daß das Grundgehäuse auf seiner Innenseite mit Aufnahmerippen versehen ist, die seitlich in Vertiefungen der Führungsprofile eingreifen.

Um in axialer Richtung größere Kräfte übertragen zu können und zu verhindern, daß die Führungsprofile aus dem Grundgehäuse gezogen werden könnten, sind diese in axialer Richtung in dem Grundgehäuse fixiert.

Das läßt sich auf einfache Weise dadurch realisieren, daß jedes Führungsprofil auf seiner Außenseite mit einer Ausfräsung versehen ist, in die jeweils eine seitlich in das Grundgehäuse eingeschraubte Fixierschraube oder eine mit dem Grundgehäuse verbundene Rippe eingreift.

Die Führungsprofile sind an ihren freien Enden mit einer diese verbindenden Endkappe verschlossen, wobei diese formschlüssig mit den Führungsprofilen verbunden ist. Dadurch lassen sich sonst erforderliche Abstandshalter in Verbindung mit Verschraubungen vermeiden.

Da insbesondere bei längeren Spindeln ein seitliches Schlagen auftreten kann, ist auf der Innenseite der Endkappe zusätzlich eine Büchse zur Führung der Spindel einstückig angeformt.

Die Endkappe sollte weiterhin in axialer Richtung an den Führungsprofilen fixiert sein, was dadurch erfolgen kann, daß die Endkappe durch eine Schraubverbindung mit wenigstens einem der Führungsprofile verbunden wird. Damit kann verhindert werden, daß sich die Endkappe unbeabsichtigt löst. Gleichzeitig wird dadurch die Möglichkeit geschaffen, daß die Endkappe mit einer Aufnahmevorrichtung zur Verbindung mit einer Haltevorrichtung versehen werden kann.

Die Aufnahmevorrichtungen am Grundgehäuse und/oder an der Endkappe können als Gabelköpfe oder als mit einer Querbohrung versehene Befestigungsprofile ausgebildet sein.

Um zu vermeiden, daß die Spindel bei größeren Belastungen innerhalb des Grundgehäuses verdrückt werden kann und dadurch das Zahnrad außer Eingriff gerät, ist innerhalb des Grundgehäuses eine die Spindel umgebende Büchse vorgesehen, die mit den Führungsprofilen formschlüssig verbunden ist.

In einer Variante kann die Büchse auch aus sich an das Führungsprofil anschließenden Lagerschalen bestehen, die in das Grundgehäuse eingelegt oder eingeformt sind.

In einer weiteren Fortführung der Erfindung ist an dem Schiebeteil eine mit der Betätigungseinrichtung des verstellbaren Sessels gekoppelte Gabel angelenkt.

Eine Verlagerung der Anlenkpunkte der Gabel nach vorn oder hinten, bezogen auf das Grundgehäuse, kann durch seitlich an dem Schiebeteil befestigte Platten erfolgen, an denen die Gabel angelenkt ist.

Zur Vermeidung des Eindringens von Staub ist es von Vorteil, wenn der Schlitz zwischen den Führungsprofilen durch einen diese umgebenden Faltenbalg abgedeckt ist. Dieser Faltenbalg vermindert weiterhin das Verletzungsrisiko durch den ansonsten frei zugänglichen Schlitz.

In einer weiteren Fortbildung der Erfindung ist der Antrieb mit einer peripheren Netzfreischaltung verbunden, die den Antrieb bei Nichtgebrauch vollständig vom Netz trennt.

Um zu verhindern, daß die Führungsprofile in Querrichtung belastet werden, ist es zweckmäßig, die am Grundgehäuse befindliche Aufnahmevorrichtung oder die an der Endkappe befindliche Aufnahmevorrichtung an einem Haltearm ortsfest verschwenkbar anzulenken. Bei einer Betätigung des Schiebeteiles wird somit erreicht, daß die Gabel über den gesamten Hubweg geschwenkt werden kann, wobei nur axiale Kräfte auf die Führungsprofile einwirken, da das freie Ende des Antriebes frei nach oben oder unten schwenken kann.

In einer Variante sind die Aufnahmevorrichtungen am Grundgehäuse und an der Endkappe jeweils an einem Haltearm ortsfest befestigt, wobei die Gabel als Gelenkgabel über einen zusätzlichen Hebelarm mit dem Schiebeteil gekoppelt ist. Dadurch wird ebenfalls das Auftreten seitlicher Kräfte wirksam verhindert.

Um im letzteren Fall die Montage des Antriebes zu erleichtern, ist es von Vorteil, wenn eine der Aufnahmevorrichtungen als offener rastbarer Gabelkopf ausgebildet ist.

Weiterhin sollten die Führungsprofile aus Metall, vorzugsweise aus Aluminium, bestehen, um eine möglichst große Belastbarkeit und lange Lebensdauer des Antriebes zu erreichen.

Die Erfindung bietet weiterhin die Möglichkeit, die Führungsprofile aus abgelängtem Endlosmaterial bzw. vorgefertigten Profilen größerer Länge herzustellen, was eine besonders kostengünstige Herstellung des Antriebes ermöglicht. Für die Herstellung der Führungsprofile eignen sich besonders Strangpreßverfahren.

In einer weiteren Ausgestaltung der Erfindung ist eines der Führungsprofile mit einem parallel zur Spindel verlaufenden Kanal zur Aufnahme von durch die Mutter betätigbaren Endschaltern versehen, so daß der Motor des Antriebes bei Erreichen der jeweiligen Hubendlage abgeschaltet wird und somit eine elektrische und/oder thermische Überlastung des Motors vermieden wird.

Die Erfindung soll nachfolgend an einem Ausführungsbeispiel näher erläutert werden. In den zugehörigen Zeichnungen zeigen:
- Fig. 1: eine Ansicht eines erfindungsgemäßen Antriebes für Teile von Sitz- und Liegemöbel mit geöffnetem Grundgehäuse;
- Fig. 2: eine Schnittdarstellung des Antriebes entlang der Linie A - A in Fig. 1, 5 oder 6;
- Fig. 3: eine Schnittdarstellung des Antriebes entlang der Linie B - B in Fig. 1, 5 oder 6;
- Fig. 4: eine Schnittdarstellung des Antriebes entlang der Linie C - C in Fig. 1, 5 oder 6;
- Fig. 5: eine Schnittdarstellung des Antriebes nach Fig. 1 mit einer einfachen Endkappe;
- Fig. 6: eine Schnittdarstellung des Antriebes nach Fig. 1 mit einer Endkappe mit einstückig angeformter Büchse;
- Fig. 7: eine Seitenansicht des Antriebes mit einseitig ortsfest gelagertem Grundgehäuse und am Schiebeteil angekoppelter Gabel;
- Fig. 8: die Vorderansicht des Antriebes nach Fig. 7 mit einer Schnittdarstellung entlang der Linie D - D in Fig. 7;
- Fig. 9: eine Seitenansicht des Antriebes mit einseitig ortsfest gelagertem Grundgehäuse und über eine zusätzliche Platte am Schiebeteil angekoppelter Gabel;
- Fig. 10: die Vorderansicht des Antriebes nach Fig. 9 mit einer Schnittdarstellung entlang der Linie E - E in Fig. 9;
- Fig. 11: einen an der Endkappe einseitig ortsfest angelenkten Antrieb mit am Schiebeteil angelenkter Gabel;
- Fig. 12: einen beidseitig ortsfest befestigten Antrieb, bei dem eine Gelenkgabel über einen zusätzlichen Hebelarm am Schiebeteil angelenkt ist;
- Fig. 13: den Antrieb nach Fig. 12, bei dem eine der Aufnahmevorrichtungen durch einen entsprechend Fig. 13a gestalteten offenen rastbaren Gabelkopf ersetzt ist; und
- Fig. 13a: die vergrößerte Darstellung eines rastbaren Gabelkopfes.

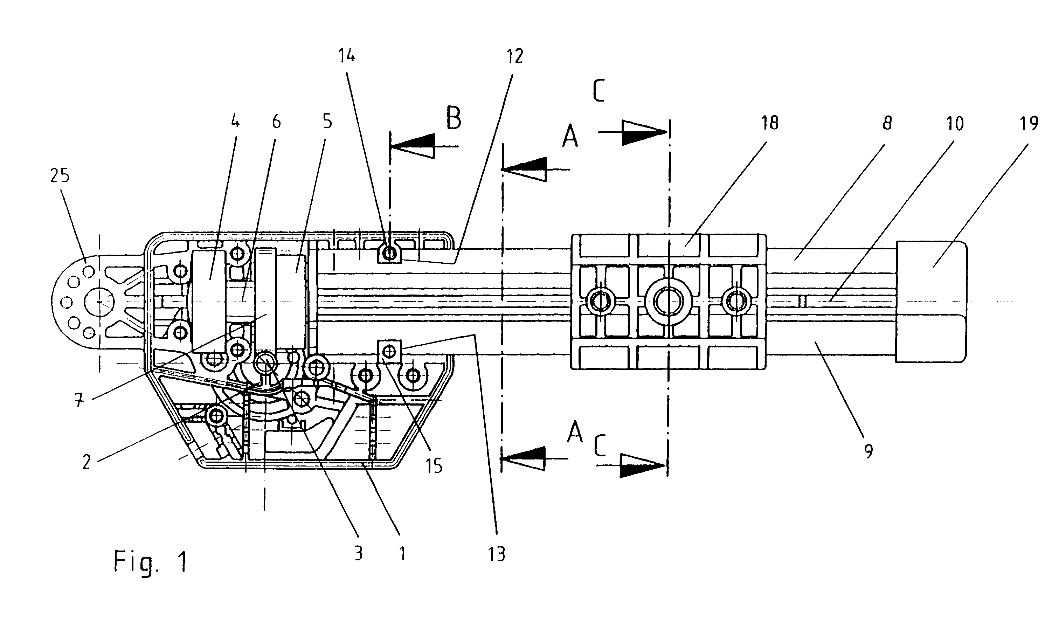

Der erfindungsgemäße Antrieb zur Verstellung von Teilen von Sitz- und Liegemöbeln besteht entsprechend Fig. 1 aus einem Grundgehäuse 1, an dem seitlich ein Motor 2 mit einer Schnecke 3, die in das Grundgehäuse 1 hineinragt, angeflanscht ist. Das Grundgehäuse 1 besteht aus zwei spiegelbildlich aufgebauten Hälften, von denen in Fig. 1 nur eine dargestellt ist. Weiterhin befinden sich in dem Grundgehäuse 1 zwei im Abstand zueinander in Lagerschalen eingelassene Wälzlager 4, 5 zur drehbaren Lagerung einer Spindel 6, auf der zwischen den Wälzlagern 4, 5 ein Zahnrad 7 befestigt ist. Dieses Zahnrad 7 steht mit der vom Motor 2 angetriebenen Schnecke 3 im Eingriff, so daß eine Drehung der Schnecke 3 eine Drehung der Spindel 6 verursacht.

Weiterhin sind in dem Grundgehäuse 1 zwei Führungsprofile 8, 9, die Spindel 6 im Abstand zueinander umschließend, derart eingelassen, daß zwischen den Führungsprofilen 8, 9 auf beiden Seiten ein Schlitz 10 freigehalten wird.

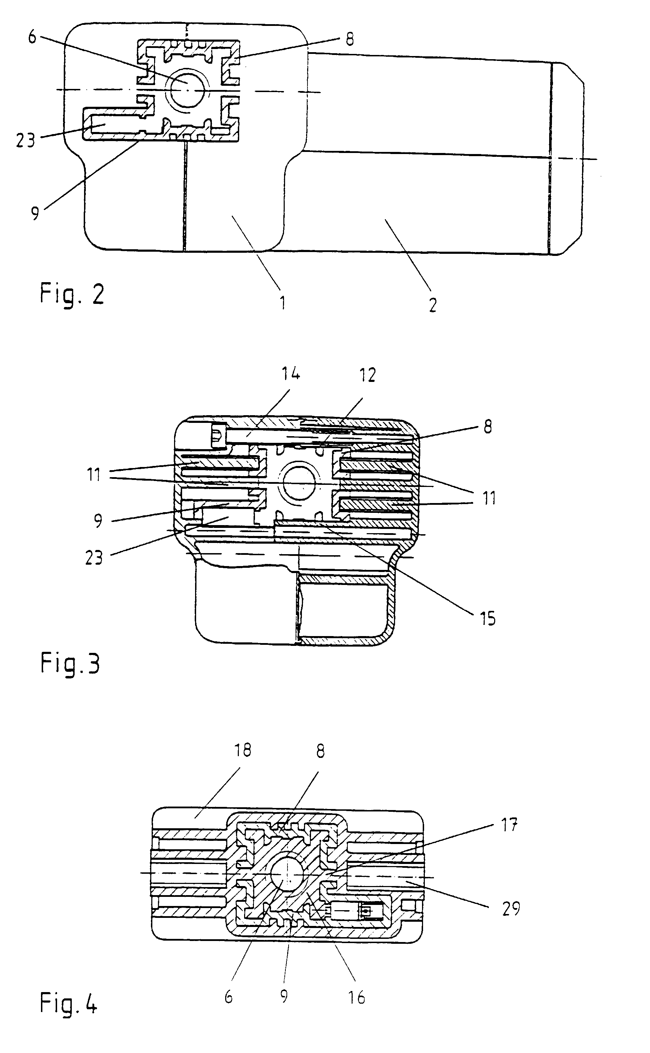

Wie aus den Fig. 2, 4 ersichtlich ist, besitzen die Führungsprofile 8, 9 jeweils einen mäanderähnlichen Querschnitt oder zumindest mehrfach profilierten Querschnitt auf deren Innen- und Außenseite. Diese Führungsprofile 8, 9 bestehen bevorzugt aus Aluminium und können durch Strangpressen in beliebiger Länge sehr leicht und billig hergestellt werden. Das Anpassen an die jeweils gewünschte Hublänge kann dann erst kurz vor der Montage des Antriebes erfolgen.

Durch die spezielle Profilierung der Führungsprofile 8, 9 besteht die Möglichkeit, diese im Grundgehäuse 1 verdrehsicher und formschlüssig zu befestigen, indem innerhalb des Grundgehäuses 1 sich seitlich in Richtung zu den Führungsprofilen 8, 9 erstreckende Aufnahmerippen 11 angeformt sind, die in entsprechende Vertiefungen auf der Außenseite der Führungsprofile 8, 9 eintauchen (Fig. 3). Durch die Aufnahmerippen 11 wird eine besonders feste Verbindung der Führungsprofile 8, 9 mit dem Grundgehäuse 1 erreicht.

Um die Führungsprofile 8, 9 zusätzlich in axialer Richtung im Grundgehäuse festzulegen, sind diese zusätzlich mit jeweils einer auf deren Außenseite quer verlaufenden Ausfräsung 12, 13 versehen (Fig. 1). In die Ausfräsung 12 ist zu diesem Zweck eine Fixierschraube 14 eingeschraubt, die gleichzeitig zur Verbindung der beiden Gehäusehälften des Grundgehäuses 1 miteinander dient. Die zweite Ausfräsung 13 dient zur Aufnahme einer aus dem Grundgehäuse 1 in Richtung zur Ausfräsung 13 hervorstehenden Rippe 15. Auf diese Weise wird das Führungsprofil 8 durch die Fixierschraube 14 und das Führungsprofil 9 durch die Rippe 15 im Grundgehäuse 1 fixiert.

Zwischen den Führungsprofilen 8, 9 ist eine Mutter 16 auf der mit einem Gewinde versehenen Spindel 6 angeordnet, deren Außenprofil dem Innenprofil der Führungsprofile 8, 9 entspricht. Dadurch kann die Mutter 16 durch die Spindel 6 verdrehsicher hin- und herbewegt werden (Fig. 4).

Wie aus Fig. 3 weiterhin ersichtlich ist, ist die Mutter 16 durch Rippen 17, die sich auf beiden Seiten der Mutter 16 durch die Schlitze 10 erstrecken, mit einem Schiebeteil 18 einstückig verbunden, wobei die Innenkontur des Schiebeteiles 18 der Außenkontur der Führungsprofile 8, 9 entspricht. Durch die einstückige Verbindung der Mutter 16 mit dem Schiebeteil 18 und dadurch, daß die Mutter 16 die Führungsprofile 8, 9 innen abstützt und das Schiebeteil 18 die Führungsprofile 8, 9 außen formgleich umschließt, wird eine erhebliche mechanische Stabilität des gesamten Antriebes in jeder Hublage des Schiebestückes 18 erreicht.

Es ist selbstverständlich auch möglich, die Mutter 16 und das Schiebeteil 18 einzeln herzustellen und bei der Montage durch eine durch den Schlitz 10 greifende Schraubverbindung miteinander zu verbinden. Die übertragbaren Kräfte sind hier jedoch deutlich geringer.

Die Herstellung der einstückigen Mutter-Schiebeteil-Kombination 16/18 oder der Einzelteile kann durch Spritzgießen oder Strangpressen erfolgen, wobei als Materialien Kunststoff oder Aluminium in Betracht kommen.

Zusätzlich sind die Führungsprofile 8, 9 an ihrem freien Ende durch eine vorzugsweise aus Kunststoff bestehende Endkappe 19 formschlüssig verschlossen und miteinander verbunden.

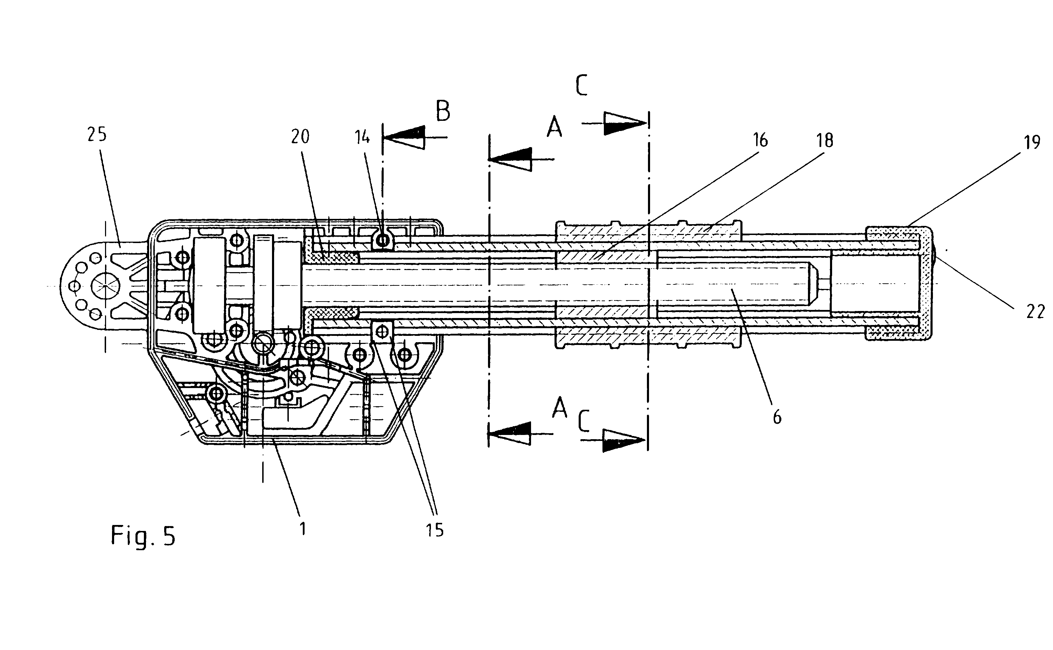

Um ein Verdrücken der Spindel 6 innerhalb des Grundgehäuses 1 beim Auftreten größerer Kräfte zu verhindern, ist eine Büchse 20 innerhalb des Grundgehäuses 1 formschlüssig in die Führungsprofile 8, 9 eingelassen (Fig. 5). Es ist selbstverständlich auch möglich, in das Grundgehäuse 1 einzelne Lagerschalen anschließend an die Führungsprofile 8, 9 einzulassen oder einzuformen.

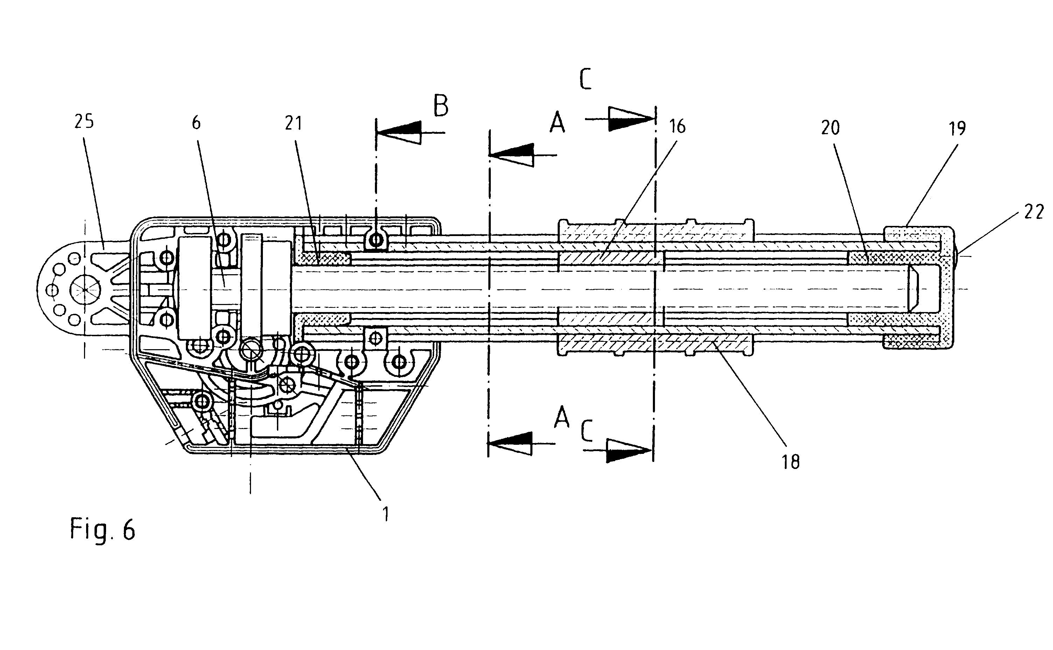

Wie aus Fig. 6 ersichtlich ist, kann die Endkappe 19 ebenfalls mit einer angeformten Büchse 21 versehen werden, in der das freie Ende der Spindel 6 geführt wird. Dadurch wird ein sonst bei längeren Spindeln 6 mögliches Schlagen verhindert.

Die Befestigung der Endkappe 19 an den Führungsprofilen 8, 9 kann sowohl formschlüssig rastend oder mittels einer Verschraubung 22 in axialer Richtung oder in ähnlicher Weise wie die axiale Fixierung der Führungsprofile 8, 9 im Grundgehäuse 1 in Querrichtung vorgenommen werden.

Die Montage der Mutter 16 mit dem zugehörigen Schiebeteil 18 kann durch einfaches Aufstecken auf die Führungsprofile 8, 9 bei gleichzeitigem Drehen der Spindel 6 und nachfolgendem Aufsetzen der Endkappe 19 erfolgen.

Weiterhin ist das untere Führungsprofil 9 mit einem längs verlaufenden Kanal 23 zur Aufnahme von Endschaltern 24 versehen (Fig. 2, 3, 4).

Zur Vermeidung des Eindringens von Staub ist es von Vorteil, wenn der Schlitz 10 zwischen den Führungsprofilen 8, 9 durch einen die Führungsprofile 8, 9 umgebenden Faltenbalg abgedeckt wird, der lediglich das Schiebeteil 18 frei läßt. Dadurch wird ein ansonsten durch den frei zugänglichen Schlitz 10 bestehendes Verletzungsrisiko vollständig vermieden.

Weiterhin kann der Antrieb mit einer peripheren Netzfreischaltung versehen werden, die den Antrieb bei Nichtgebrauch vollständig vom Netz trennt.

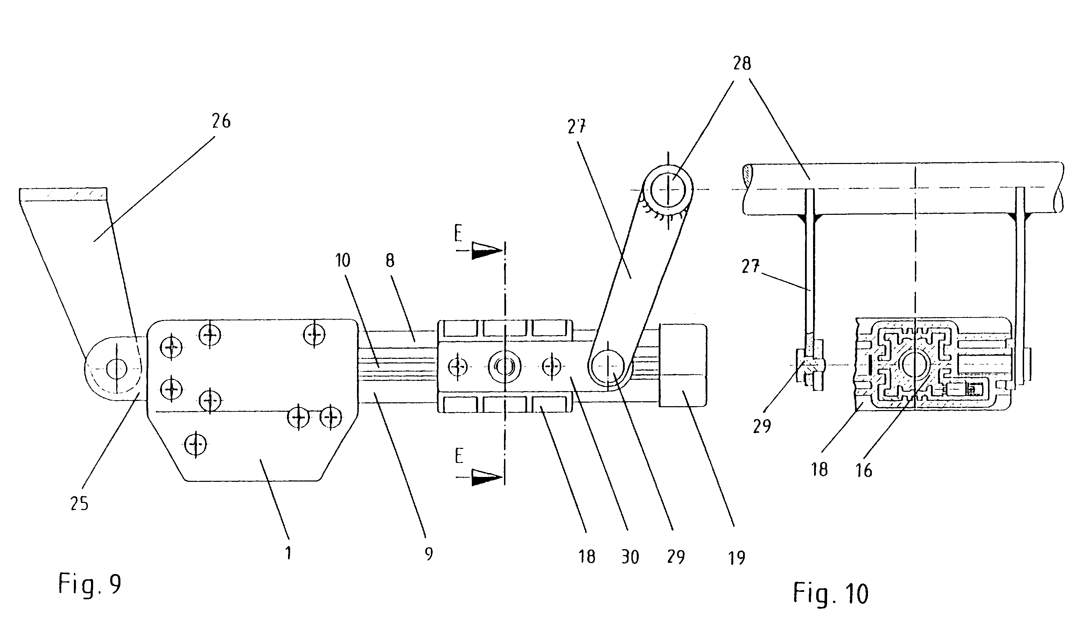

Die Fig. 7, 8 zeigen eine Einbauvariante des Antriebes, bei dem das Grundgehäuse 1 mittels einer Aufnahmevorrichtung 25, beispielsweise in Form eines Gabelkopfes an einem Haltearm 26 ortsfest verschwenkbar angelenkt ist. An dem Schiebeteil 18 ist eine Gabel 27 verschwenkbar befestigt, die ihrereits über eine Welle 28 mit einer nicht dargestellten Betätigungsvorrichtung für verstellbare Teile von Sitz- und Liegemöbeln verbunden ist. Die Befestigung der Gabel 27 an dem Schiebeteil 18 kann durch eine Befestigungsvorrichtung 29, beispielsweise über seitlich in das Schiebeteil 18 eingeschraubte Schrauben erfolgen. Ebenso ist es möglich, in das Schiebeteil 18 jeweils seitlich Buchsen oder Achsen einzulassen, an denen die Gabel 27 formschlüssig befestigt werden kann.

Durch diese Einbauvariante des Antriebes wird sichergestellt, daß auf das Grundgehäuse 1 und die Führungsprofile 8, 9 nur axiale Kräfte ausgeübt werden, da das freie Ende des Antriebes frei schwenkbar ist.

Eine weitere Variante geht aus den Fig. 9, 10 hervor. Hier ist die Gabel 27 nicht unmittelbar an dem Schiebeteil 18 angelenkt, sondern über eine mit diesem verschraubte oder verschweißte Platte 30. Damit besteht die Möglichkeit, den Anlenkpunkt an dem Schiebeteil nach hinten in Richtung zum Grundgehäuse 1 oder nach vorn zu verlagern.

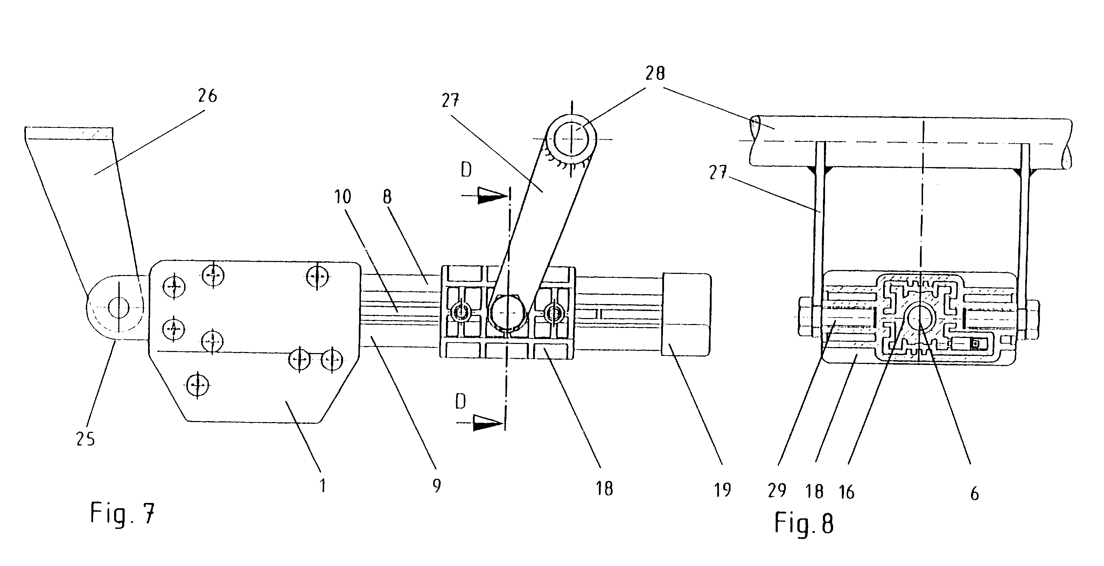

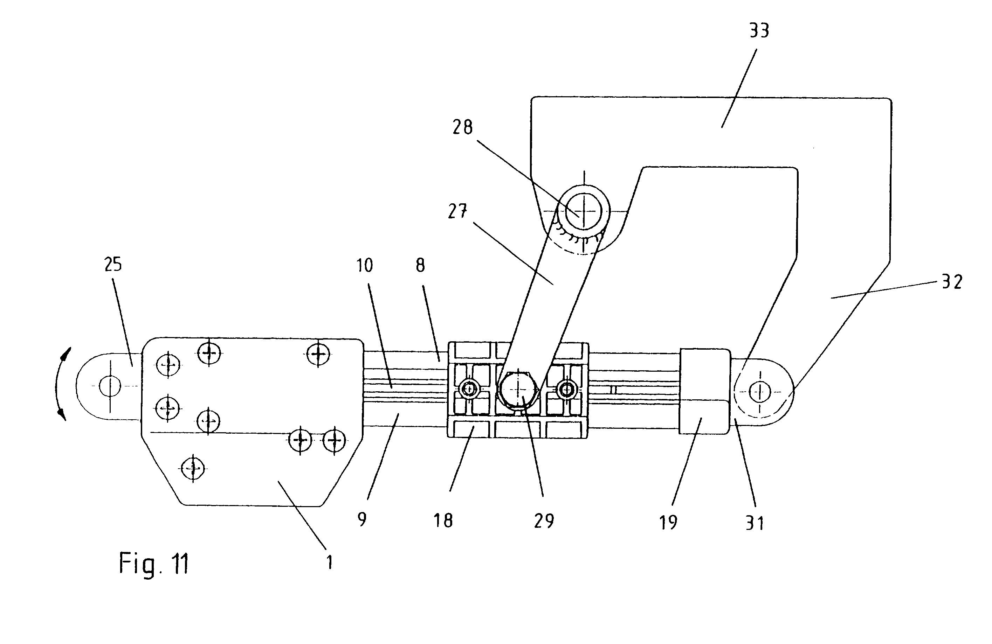

Die Fig. 11 zeigt eine Einbauvariante des Antriebes, bei dem dieser über eine Aufnahmevorrichtung 31 an der Endkappe 19 an einem Haltearm 32 ortsfest verdrehbar angelenkt ist. Die Verbindung der an dem Schiebeteil 18 angelenkten Gabel 27 mit der Betätigungseinrichtung eines Lattenrostes erfolgt hier ebenso, wie es in den Fig. 9, 10 dargestellt ist, wobei hier ein zusätzlicher Hilfsrahmen 33 zur Aufnahme des Haltearmes 32 und der Welle 28 vorgesehen ist.

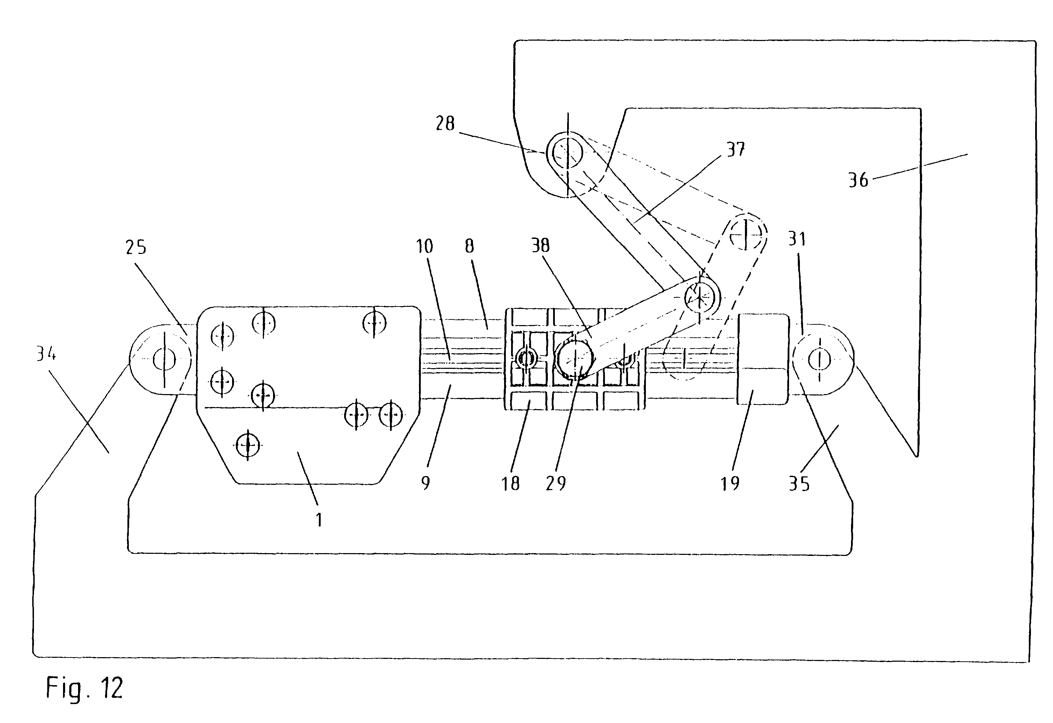

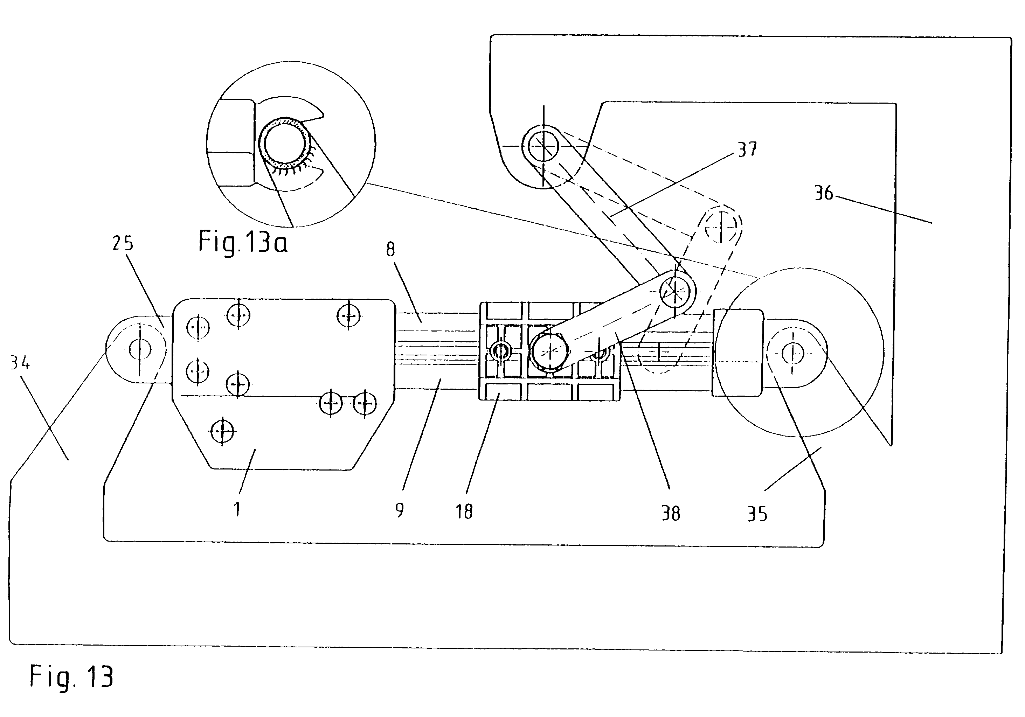

Eine besondere Einbauvariante ist in den Fig. 12 und 13 dargestellt. Hierbei ist der Antrieb beidseitig ortsfest in Haltearmen 34, 35 befestigt, die aus einem Hilfsrahmen 36 hervorstehen. Die Verbindung des Schiebestückes 18 mit der Betätigungsvorrichtung eines Lattenrostes erfolgt hierbei über eine Gelenkgabel 37 mit einem zusätzlich angelenkten Hebelarm 38.

Durch diese Einbauvariante wird ebenfalls sichergestellt, daß auf die Führungsprofile 8, 9 nur axiale Kräfte ausgeübt werden.

Um in diesem Fall die Montage des Antriebes zu erleichtern, ist es von Vorteil, wenn eine der Aufnahmevorrichtungen 25, 31 entsprechend Fig. 13a als offener rastbarer Gabelkopf ausgebildet ist.

### Bezugszeichenliste

- 1: Grundgehäuse
- 2: Motor
- 3: Schnecke
- 4: Wälzlager
- 5: Wälzlager
- 6: Spindel
- 7: Zahnrad
- 8: Führungsprofil
- 9: Führungsprofil
- 10: Schlitz
- 11: Aufnahmerippe
- 12: Ausfräsung
- 13: Ausfräsung
- 14: Fixierschraube
- 15: Rippe
- 16: Mutter
- 17: Rippe
- 18: Schiebeteil
- 19: Endkappe
- 20: Büchse
- 21: Büchse
- 22: Verschraubung
- 23: Kanal
- 24: Endschalter
- 25: Aufnahmevorrichtung
- 26: Aufnahmevorrichtung
- 27: Gabel
- 28: Welle
- 29: Schraube
- 30: Platte
- 31: Aufnahmevorrichtung
- 32: Haltearm
- 33: Hilfsrahmen
- 34: Haltearm
- 35: Haltearm
- 36: Hilfsrahmen
- 37: Gelenkgabel
- 38: Hebelarm

## Patentansprüche

1. Antrieb zur Verstellung von Teilen von Sitz- und Liegemöbeln, vorzugsweise für verstellbare Sessel, bestehend aus einem Grundgehäuse (1) zur Aufnahme eines Getriebes zum Antrieb einer ortsfest drehbar im Grundgehäuse (1) angeordneten Spindel (6), die durch ein mit dem Grundgehäuse (1) verbundenes Führungsprofil (8, 9) umgeben ist, einem seitlich am Grundgehäuse angeflanschten und mit dem Getriebe in Verbindung stehenden Motor (2), wobei an dem Gehäuse (1) eine Aufnahmevorrichtung (25, 26, 31) zur Verbindung mit einer Stelleinrichtung zur Verstellung des betreffenden beweglichen Teiles des Sitz- oder Liegemöbels vorgesehen ist und bei dem die Spindel (6) eine innerhalb des Führungsprofiles (8, 9) in Längsrichtung bewegbare und verdrehsicher geführte Mutter (16) antreibt, die mit der Stelleinrichtung verbunden ist, **dadurch gekennzeichnet**, daß das Führungsprofil (8, 9) zweiteilig ausgebildet ist und zwischen den Teilen des Führungsprofiles (8, 9) ein Schlitz (19) freigehalten ist und daß als Stelleinrichtung ein Schiebeteil (18) vorgesehen ist, das durch längs verlaufende und durch den Schlitz (10) greifende Rippen (17) mit der Mutter (16) verbunden ist.

2. Antrieb nach Anspruch 1, **dadurch gekennzeichnet**, daß das Schiebeteil (18) die Führungsprofile (8, 9) auf deren Außenseite formschlüssig umgibt.

3. Antrieb nach Anspruch 1, **dadurch gekennzeichnet**, daß das Schiebeteil (18) einstückig mit der Mutter (16) verbunden ist.

4. Antrieb nach einem der Ansprüche 1 bis 3, **dadurch gekennzeichnet**, daß die Führungsprofile (8, 9) einen halbschalenförmigen mäanderähnlichen Querschnitt aufweisen und formschlüssig mit dem Grundgehäuse (1) verbunden sind.

5. Antrieb nach Anspruch 4, **dadurch gekennzeichnet**, daß das Grundgehäuse (1) auf seiner Innenseite mit Aufnahmerippen (11) versehen ist, die seitlich in Vertiefungen der Führungsprofile (8, 9) eingreifen.

6. Antrieb nach einem der Ansprüche 1 bis 5, **dadurch gekennzeichnet**, daß die Führungsprofile (8, 9) in axialer Richtung in dem Grundgehäuse (1) fixiert sind.

7. Antrieb nach Anspruch 6, **dadurch gekennzeichnet**, daß jedes Führungsprofil (8, 9) auf seiner Außenseite mit einer Ausfräsung (12, 13) versehen ist, in die jeweils eine seitlich in das Grundgehäuse (1) eingeschraubte Fixierschraube (14) oder eine mit dem Grundgehäuse (1) verbundene Rippe (15) eingreift.

8. Antrieb nach einem der Ansprüche 1 bis 7, **dadurch gekennzeichnet**, daß die Führungsprofile (8, 9) an ihren freien Enden mit einer diese verbindenden Endkappe (19) verschlossen sind.

9. Antrieb nach Anspruch 8, **dadurch gekennzeichnet**, daß die Endkappe (19) formschlüssig mit den Führungsprofilen (8, 9) verbunden ist.

10. Antrieb nach einem der Ansprüche 8 und 9, **dadurch gekennzeichnet**, daß auf der Innenseite der Endkappe (19) eine Büchse (20) zur Führung der Spindel (6) einstückig angeformt ist.

11. Antrieb nach Anspruch 10, **dadurch gekennzeichnet**, daß die Endkappe (19) in axialer Richtung an den Führungsprofilen (8, 9) fixiert ist.

12. Antrieb nach einem der Ansprüche 9 bis 11, **dadurch gekennzeichnet**, daß die Endkappe (19) durch eine Verschraubung (22) mit wenigstens einem der Führungsprofile (8; 9) verbunden ist.

13. Antrieb nach einem der Ansprüche 9 bis 12, **dadurch gekennzeichnet**, daß die Endkappe (19) mit einer Aufnahmevorrichtung (31) zur Verbindung mit einer Haltevorrichtung versehen ist.

14. Antrieb nach einem der Ansprüche 1 bis 13, **dadurch gekennzeichnet**, daß die Aufnahmevorrichtungen (25, 31) am Grundgehäuse und/oder an der Endkappe (19) als Gabelköpfe ausgebildet sind.

15. Antrieb nach einem der Ansprüche 1 bis 14, **dadurch gekennzeichnet**, daß die Aufnahmevorrichtungen (25, 31) am Grundgehäuse und/oder an der Endkappe (19) als mit einer Querbohrung versehene Befestigungsprofile ausgebildet sind.

16. Antrieb nach einem der Ansprüche 1 bis 15, **dadurch gekennzeichnet**, daß innerhalb des Grundgehäuses (1) eine die Spindel (6) umgebende Büchse (21) vorgesehen ist, die mit den Führungsprofilen (8, 9) formschlüssig verbunden ist.

17. Antrieb nach einem der Ansprüche 1 bis 15, **dadurch gekennzeichnet**, daß die Büchse (21) aus sich an das Führungsprofil (8, 9) anschließenden Lagerschalen besteht, die in das Grundgehäuse (1) eingelegt oder eingeformt sind.

18. Antrieb nach einem der Ansprüche 1 bis 17, **dadurch gekennzeichnet**, daß an dem Schiebeteil (18) eine mit der Betätigungseinrichtung des verstellbaren Teils des Sitz- und Liegemöbels gekoppelte Gabel (27) angelenkt ist.

19. Antrieb nach Anspruch 18, **dadurch gekennzeichnet**, daß die Gabel (27) über seitlich an dem Schiebeteil (18) befestigte Platten (30) mit diesem verbunden ist.

20. Antrieb nach einem der Ansprüche 1 bis 19, **dadurch gekennzeichnet**, daß der Schlitz (10) zwischen den Führungsprofilen (8, 9) durch einen diese umgebenden Faltenbalg abgedeckt ist.

21. Antrieb nach einem der Ansprüche 1 bis 20, **dadurch gekennzeichnet**, daß der Antrieb mit einer peripheren Netzfreischaltung verbunden ist, die diesen bei Nichtgebrauch vom Netz trennt.

22. Antrieb nach einem der Ansprüche 1 bis 21,**dadurch gekennzeichnet**, daß die Aufnahmevorrichtung am Grundgehäuse (1) an einem Haltearm (26) ortsfest verschwenkbar angelenkt ist.

23. Antrieb nach einem der Ansprüche 1 bis 21, **dadurch gekennzeichnet**, daß die Aufnahmevorrichtung (31) an der Endkappe (19) an einem Haltearm (32) ortsfest verschwenkbar angelenkt ist.

24. Antrieb nach einem der Ansprüche 1 bis 21, **dadurch gekennzeichnet**, daß die Aufnahmevorrichtungen (25, 31) am Grundgehäuse (1) und an der Endkappe (19) jeweils an einem Haltearm (34, 35) ortsfest befestigt sind und daß die Gabel als Gelenkgabel (37) über einen zusätzlichen Hebelarm (38) mit dem Schiebeteil gekoppelt ist.

25. Antrieb nach Anspruch 24, **dadurch gekennzeichnet**, daß eine der Aufnahmevorrichtungen (25) als offener rastbarer Gabelkopf ausgebildet ist.

26. Antrieb nach einem der Ansprüche 1 bis 25, **dadurch gekennzeichnet**, daß die Führungsprofile (8, 9) aus Metall, vorzugsweise aus Aluminium, bestehen.

27. Antrieb nach einem der Ansprüche 1 bis 26, **dadurch gekennzeichnet**, daß die Führungsprofile (8, 9) aus abgelängtem Endlosmaterial bestehen.

28. Antrieb nach einem der Ansprüche 1 bis 27, **dadurch gekennzeichnet**, daß eines der Führungsprofile (8, 9) mit einem parallel zur Spindel (6) verlaufenden Kanal (23) zur Aufnahme von durch die Mutter (16) betätigbaren Endschaltern (24) versehen ist.

## Claims

1. Drive for adjusting parts of seating and reclining furniture, preferably for adjustable chairs, consisting of a basic housing (1) for accepting a mechanism for driving a spindle (6) fixed in position in the basic housing (1) in a rotating manner and surrounded by a guide section (8, 9) connected to the basic housing (1), and a motor (2) flanged to the side of the basic housing and connected to the mechanism, an accepting device (25, 26, 31) for connection to an adjuster for adjusting the movable part of the seating or reclining furniture being provided on the housing (1) and in which a spindle (6) drives a nut (16) which moves in the longitudinal direction in a non-twisting manner within the guide section (8, 9), the nut (16) being connected to the adjuster, **characterised in that** the guide section (8, 9) is designed in two parts and a slit (10) is kept free between the parts of the guide section (8, 9), and that a slider (18) is designated as the adjuster which is connected to the nut (16) by means of longitudinal fins (17) which reach through the slit (10).

2. Drive according to Claim 1, **characterised in that** the slider (18) surrounds the outside of the guide sections (8, 9) in a form-fitting manner.

3. Drive according to Claim 1, **characterised in that** the slider (18) is connected to the nut (16) in one piece.

4. Drive according to Claims 1 to 3, **characterised in that** the guide sections (8, 9) display a shell-shaped, fret-like cross-section and are positively connected to the basic housing (1).

5. Drive according to Claim 4, **characterised in that** the inside of the basic housing (1) is provided with accepting fins (11) which laterally reach into recesses in the guide sections (8, 9).

6. Drive according to Claims 1 to 5, **characterised in that** the guide sections (8, 9) are fixed in the axial direction in the basic housing (1).

7. Drive according to Claim 6, **characterised in that** the outside of each guide section (8, 9) is provided with a milled recess (12, 13), into which a fixing screw (14) screwed into the side of the basic housing (1) or a fin (15) connected to the basic housing (1) reaches.

8. Drive according to Claims 1 to 7, **characterised in that** the free ends of the guide sections (8, 9) are sealed with an end cap (19) which connects them.

9. Drive according to Claim 8, **characterised in that** the end cap (19) is positively connected to the guide sections (8, 9).

10. Drive according to Claims 8 and 9, **characterised in that** a bush (20) for guiding the spindle (6) is integrally moulded on the inside of the end cap (19).

11. Drive according to Claim 10, **characterised in that** the end cap (19) is fixed on the guide sections (8, 9) in the axial direction.

12. Drive according to Claims 9 to 11, **characterised in that** the end cap (19) is connected to at least one of the guide sections (8; 9) by means of a screwed connection (22).

13. Drive according to Claims 9 to 12, **characterised in that** the end cap (19) is provided with an accepting device (31) for connection to a holding device.

14. Drive according to one of the Claims 1 to 13, **characterised in that** the accepting devices (25, 31) on the basic housing and/or the end cap (19) are designed as fork heads.

15. Drive according to one of the Claims 1 to 14, **characterised in that** the accepting devices (25, 31) on the basic housing and/or the end cap (19) are designed as fastening sections provided with a cross-hole.

16. Drive according to one of the Claims 1 to 15, **characterised in that** a bush (21) surrounding the spindle (6) is provided within the basic housing (1), the bush being positively connected to the guide sections (8, 9).

17. Drive according to one of the Claims 1 to 15, **characterised in that** the bush (21) consists of bearing shells which follow on from the guide section (8, 9) and are inserted or moulded into the basic housing (1).

18. Drive according to one of the Claims 1 to 17, **characterised in that** a fork (27) coupled with the operating device of the adjustable parts of the seating and reclining furniture is hinged on the slider (18).

19. Drive as per Claim 18, **characterised in that** the fork (27) is connected to the slider (18) via plates (30) fastened to the side of the latter.

20. Drive according to one of the Claims 1 to 19, **characterised in that** the slit (10) between the guide sections (8, 9) is covered by bellows surrounding the latter.

21. Drive according to one of the Claims 1 to 20, **characterised in that** the drive is connected to a peripheral mains isolation device which isolates it from the mains when not in use.

22. Drive according to Claims 1 to 21, **characterised in that** the accepting device on the basic housing (1) is stationarily hinged to a holding arm (26) in pivoting fashion.

23. Drive according to Claims 1 to 21, **characterised in that** the accepting device (31) on the end cap (19) is stationarily hinged to a holding arm (32) in pivoting fashion.

24. Drive according to Claims 1 to 21, **characterised in that** the accepting devices (25, 31) on the basic housing (1) and the end cap (19) are each fixed in position on one holding arm (34, 35) and that the fork is coupled with the slider as a hinged fork (37) via an additional lever arm (38).

25. Drive according to Claim 24, **characterised in that** one of the accepting devices (25) is designed as an open, snap-in fork head.

26. Drive according to one of the Claims 1 to 25, **characterised in that** the guide sections (8, 9) are made of metal, preferably aluminium.

27. Drive according to one of the Claims 1 to 26, **characterised in that** the guide sections (8, 9) are made of endless material cut to length.

28. Drive according to one of the Claims 1 to 27, **characterised in that** one of the guide sections (8, 9) is provided with a channel (23) running parallel to the spindle (6) to accept limit switches (24) operated by the nut (16).

## Revendications

1. Dispositif de commande pour le réglage de la position de parties de sièges et de meubles de couchage, de préférence pour des fauteuils réglables, comprenant un boîtier de base (1) servant de logement à un mécanisme de transmission pour l'entraînement d'une broche (6), qui est montée à rotation, en position fixe, dans le boîtier de base (1) et qui est entourée par un profilé de guidage (8, 9) assemblé au boîtier de base (1), et un moteur (2) rapporté latéralement sur le boîtier de base et relié au mécanisme de transmission, une monture (25, 26, 31) étant alors prévue sur le boîtier (1) en vue de la réalisation d'une liaison avec un organe de positionnement pour le réglage de la position de la partie mobile concernée du siège ou du meuble de couchage, et dans lequel la broche (6) entraîne un écrou (16) qui est déplaçable en direction longitudinale à l'intérieur du profilé de guidage (8, 9) et y est guidé avec un blocage en rotation, cet écrou étant relié à l'organe de positionnement, caractérisé en ce que le profilé de guidage (8, 9) est réalisé en deux éléments et une fente (10) est ménagée entre les éléments du profilé de guidage (8, 9), et en ce qu'il est prévu, en tant qu'organe de positionnement, une pièce coulissante (18) qui est reliée à l'écrou (16) par des ailettes (17) s'étendant dans le sens de sa longueur et traversant la fente (10).

2. Dispositif de commande selon la revendication 1, caractérisé en ce que la pièce coulissante (18) entoure étroitement, par formes complémentaires, les profilés de guidage (8, 9) sur leur face extérieure.

3. Dispositif de commande selon la revendication 1, caractérisé en ce que la pièce coulissante (18) est reliée d'un seul tenant à l'écrou (16).

4. Dispositif de commande selon l'une des revendications 1 à 3, caractérisé en ce que les profilés de guidage (8, 9) présentent une section transversale en forme de demi-coque au contour découpé et sont assemblés au boîtier de base (1) par formes complémentaires.

5. Dispositif de commande selon la revendication 4, caractérisé en ce que le boîtier de base (1) est muni, sur sa face intérieure, d'ailettes de maintien (11) qui s'engagent latéralement dans des renfoncements des profilés de guidage (8, 9).

6. Dispositif de commande selon l'une des revendications 1 à 5, caractérisé en ce que les profilés de guidage (8, 9) sont immobilisés en direction axiale dans le boîtier de base (1).

7. Dispositif de commande selon la revendication 6, caractérisé en ce que chaque profilé de guidage (8, 9) est pourvu, sur sa face extérieure, d'une fraisure (12, 13) dans laquelle s'engage une vis de fixation respective (14) vissée latéralement dans le boîtier de base (1) ou une ailette respective (15) reliée au boîtier de base (1).

8. Dispositif de commande selon l'une des revendications 1 à 7, caractérisé en ce que les profilés de guidage (8, 9) sont, à leurs extrémités libres, fermés à l'aide d'un capuchon d'extrémité (19) qui les assemble.

9. Dispositif de commande selon la revendication 8, caractérisé en ce que le capuchon d'extrémité (19) est assemblé par formes complémentaires aux profilés de guidage (8, 9).

10. Dispositif de commande selon l'une des revendications 8 et 9, caractérisé en ce que, sur la face intérieure du capuchon d'extrémité (19), est formée, d'un seul tenant avec celui-ci, une douille (20) destinée à guider la broche (6).

11. Dispositif de commande selon la revendication 10, caractérisé en ce que le capuchon d'extrémité (19) est immobilisé en direction axiale sur les profilés de guidage (8, 9).

12. Dispositif de commande selon l'une des revendications 9 à 11, caractérisé en ce que le capuchon d'extrémité (19) est relié par une fixation à vis (22) à l'un au moins des profilés de guidage (8, 9).

13. Dispositif de commande selon l'une des revendications 9 à 12, caractérisé en ce que le capuchon d'extrémité (19) est muni d'une monture (31) pour la réalisation d'une liaison avec un dispositif de support.

14. Dispositif de commande selon l'une des revendications 1 à 13, caractérisé en ce que les montures (25, 31), présentes sur le boîtier de base et/ou sur le capuchon d'extrémité (19), sont réalisées sous la forme de chapes.

15. Dispositif de commande selon l'une des revendications 1 à 14, caractérisé en ce que les montures (25, 31), présentes sur le boîtier de base et/ou sur le capuchon d'extrémité (19), sont réalisées sous la forme de profilés de fixation pourvus d'une forure transversale.

16. Dispositif de commande selon l'une des revendications 1 à 15, caractérisé en ce qu'à l'intérieur du boîtier de base (1), il est prévu une douille (21) entourant la broche (6), douille qui est assemblée par formes complémentaires aux profilés de guidage (8, 9).

17. Dispositif de commande selon l'une des revendications 1 à 15, caractérisé en ce que la douille (21) est constituée de coquilles de coussinet qui se raccordent aux profilés de guidage (8, 9) et qui sont insérées ou moulées dans le boîtier de base (1).

18. Dispositif de commande selon l'une des revendications 1 à 17, caractérisé en ce que sur la pièce coulissante (18), est articulée une fourche (27) accouplée au dispositif d'actionnement de la partie réglable du siège ou du meuble de couchage.

19. Dispositif de commande selon la revendication (18), caractérisé en ce que la fourche (27) est reliée à la pièce coulissante (18) par l'intermédiaire de plaquettes (30) fixées latéralement à cette dernière.

20. Dispositif de commande selon l'une des revendications 1 à 19, caractérisé en ce que la fente (10) formée entre les profilés de guidage (8, 9) est couverte par un soufflet entourant ces derniers.

21. Dispositif de commande selon l'une des revendications 1 à 20, caractérisé en ce que le dispositif de commande est relié à un circuit périphérique de déconnexion du réseau, qui le coupe du réseau en cas de non utilisation.

22. Dispositif de commande selon l'une des revendications 1 à 21, caractérisé en ce que la monture présente sur le boîtier de base (1) est articulée à pivotement, en un point fixe, à un bras de support (26).

23. Dispositif de commande selon l'une des revendications 1 à 21, caractérisé en ce que la monture (31) présente sur le capuchon d'extrémité (19) est articulée à pivotement, en un point fixe, à un bras de support (32).

24. Dispositif de commande selon l'une des revendications 1 à 21, caractérisé en ce que les montures (25, 31), présentes sur le boîtier de base (1) et sur le capuchon d'extrémité (19), sont chacune fixées, en un point fixe, à un bras de support (34, 35), et en ce que la fourche, constituée par une fourche articulée (37), est accouplée à la pièce coulissante par l'intermédiaire d'un bras de levier supplémentaire (38).

25. Dispositif de commande selon la revendication 24, caractérisé en ce que l'une des montures (25) est réalisée sous la forme d'une chape ouverte encliquetable.

26. Dispositif de commande selon l'une des revendications 1 à 25, caractérisé en ce que les profilés de guidage (8, 9) sont réalisés en un métal, de préférence en aluminium.

27. Dispositif de commande selon l'une des revendications 1 à 26, caractérisé en ce que les profilés de guidage (8, 9) sont réalisés à partir d'un matériau sans fin débité à bonne longueur.

28. Dispositif de commande selon l'une des revendications 1 à 27, caractérisé en ce que l'un des profilés de guidage (8, 9) est pourvu d'un canal (23) s'étendant parallèlement à la broche (6) et destiné à recevoir des interrupteurs de fin de course (24) pouvant être actionnés par l'écrou (16).
